(19) Europäisches Patentamt
European Patent Office
Office européen des brevets

(11) Veröffentlichungsnummer: **0 031 099**
**B1**

# (12) EUROPÄISCHE PATENTSCHRIFT

(45) Veröffentlichungstag der Patentschrift: **18.07.84**

(51) Int. Cl.³: **C 09 B 62/002,** D 06 P 3/66, D 06 P 3/10

(21) Anmeldenummer: **80107850.2**

(22) Anmeldetag: **12.12.80**

(54) **Verbindungen mit reaktiven Resten und ihre Verwendung zum Färben von Fasern.**

(30) Priorität: **21.12.79 DE 2951541**

(43) Veröffentlichungstag der Anmeldung: **01.07.81 Patentblatt 81/26**

(45) Bekanntmachung des Hinweises auf die Patenterteilung: **18.07.84 Patentblatt 84/29**

(84) Benannte Vertragsstaaten: **BE CH DE FR GB IT LI**

(56) Entgegenhaltungen:
**CH - A - 472 478**
**FR - A - 1 326 769**
**FR - A - 1 490 242**

**"The Chemistry of Synthetic Dyes", K. Venkataraman, Band VI, Seite 200**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen (DE)**

(72) Erfinder: **Schaffer, Ortwin, Dr.-chem, Bruesseler Ring 43, D-6700 Ludwigshafen (DE)**
Erfinder: **Patsch, Manfred, Dr.-chem, Fritz-Wendel-Strasse 4, D-6706 Wachenheim (DE)**
Erfinder: **Krueger, Heinz, Dr.-chem, Bannwaldstrasse 14, D-6833 Waghaeusel (DE)**
Erfinder: **Krallmann, Reinhold, Plauserstrasse 3, D-6719 Weisenheim (DE)**
Erfinder: **Elser, Wolfgang, Dr.-chem, Theodor-Heuss-Strasse 4, D-6706 Wachenheim (DE)**

**EP 0 031 099 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung betrifft sulfonsäuregruppenhaltige Verbindungen der allgemeinen Formel I

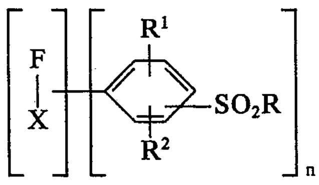

in der

| | |
|---|---|
| F | der Rest eines schwermetallfreien Monoazo-, Polyazo- oder Anthrachinonfarbstoffes, |
| X | eine Hydroxyäthylsulfonyl-, Sulfatoäthylsulfonyl-, Chloräthylsulfonyl-, Vinylsulfonyl-, Chloracetyl-, Acryloyl- oder Halogenpropionylgruppe oder eine reaktive Gruppe der Triazin-, Pyrimidin-, Chinazolin- oder Chinoxalinreihe, |
| n | die Zahlen 1 oder 2, |
| $R^1$ und $R^2$ | unabhängig voneinander Wasserstoff, Chlor, Brom, Methyl oder Methoxy und |
| R | eine.Rest der Formel |

$-CH_2-CH=CH_2$ $\quad -CH=CH-CH_3$ $\quad -CH=CH-CH_2Cl$

$-CH=CH-CH_2OH$ $\quad -CH_2-\underset{\displaystyle W}{\underset{|}{CH}}-CH_2R^3$

sind, wobei $R^3$ H, OH oder $C_1$- bis $C_3$-Alkyl und W Hydroxysulfonyl sind.

Der oder die Reste

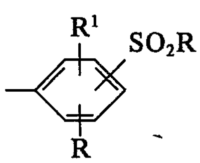

können sowohl an F als auch an X gebunden sein. Die Bindung kann direkt oder über ein Brückenglied erfolgen, wobei als Brückenglieder beispielsweise folgende Gruppen zu nennen sind:

$-NH-$, $-NHCO-$, $-NHSO_2-$, $-NHCONH-$ oder $-N=N-$.

Die Farbstoffe der Azoreihe entsprechen z. B. der allgemeinen Formel II

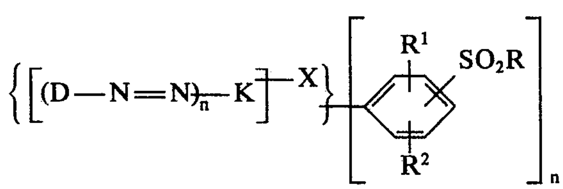

in der die Symbole n unabhängig voneinander 1 oder 2,
D der Rest einer Diazokomponente und
K der Rest einer Kupplungskomponente der Anilin-, Naphthalin-, Pyrazol-, Pyridin-, Pyrimidin-, Indol-, Acylacetarylid- oder Barbitursäurereihe sind und
$R^1$, $R^2$, R und X die angegebene Bedeutung haben.

Kupplungskomponenten der Anilin- und Naphthalinreihe sind z. B. Aniline, N-monosubstituierte Aniline, m-Phenylendiaminderivate, Naphtholsulfosäuren, Aminonaphthaline, Naphthole, Hydroxynaphthoesäurederivate, Aminonaphthalinsulfosäuren oder Aminonaphtholsulfosäuren.

Im einzelnen sind beispielsweise zu nennen:

Anilin-N-ω-methansulfonat, o- und m-Toluidin, o- und m-Anisidin, Anthranilsäure-N-ω-methansulfonat, Kresidin, 2,5-Dimethylanilin, 2,5-Dimethoxyanilin, m-Aminoacetanilid, 3-Amino-4-methoxyacetanilid, 3-Amino-4-methylacetanilid, m-Aminophenylharnstoff, N-Methylanilin, N-Methyl-m-toluidin, N-Äthylanilin, N-Äthyl-m-toluidin, N-$\beta$-Hydroxyäthylamin oder N-$\beta$-Hydroxy-m-toluidin.

Naphtholsulfonsäuren sind beispielsweise:

1-Naphthol-3-sulfonsäure, 1-Naphthol-4-sulfonsäure, 1-Naphthol-5-sulfonsäure, 1-Naphthol-8-sulfonsäure, 1-Naphthol-3,6-disulfonsäure, 1-Naphthol-3,8-disulfonsäure, 2-Naphthol-5-sulfonsäure, 2-Naphthol-6-sulfonsäure, 2-Naphthol-7-sulfonsäure, 2-Naphthol-8-sulfonsäure, 2-Naphthol-3,6-disulfonsäure, 2-Naphthol-6,8-disulfonsäure, 2-Naphthol-3,6,8-trisulfonsäure, 1,8-Dioxynaphthalin-3,6-disulfonsäure, 2,6-Dioxynaphthalin-8-sulfonsäure oder 2,8-Dioxynaphthalin-6-sulfonsäure.

Weiterhin sind beispielsweise zu nennen:

$\alpha$-Naphthylamin, N-Phenyl-$\alpha$-naphthylamin, N-Äthyl-$\alpha$-naphthylamin, N-Phenyl-$\beta$-naphthylamin, 1,5-Naphthylendiamin, 1,8-Naphthylendiamin, $\alpha$-Naphthol, $\beta$-Naphthol, 1,5-Dioxynaphthalin, 1,6-Dioxynaphthalin, 1,7-Dioxynaphthalin, 2,7-Dioxynaphthalin, 2-Hydroxynaphthalin-3-carbonsäure-N-phenylamid, 2-Hydroxynaphthalin-3-carbonsäure-N-(2′-methoxyphenyl)-amid oder 2-Hydroxynaphthalin-3-carbonsäure-N-(2′,5′-dimethoxyphenyl)-amid.

Aminonaphthalinsulfonsäuren sind beispielsweise:

1-Napthylamin-6-sulfonsäure, 1-Naphthylamin-6/7-sulfonsäure, 1-Naphthylamin-7-sulfonsäure, 1-Naphthylamin-8-sulfonsäure, 2-Naphthylamin-3,6-disulfonsäure, 2-Naphthylamin-5,7-disulfonsäure oder 1-Naphthylamin-6,8-disulfonsäure.

Als Aminonaphtholsulfonsäuren sind z. B. zu nennen:

1-Amino-5-hydroxynaphthalin-7-sulfonsäure, 1-Amino-8-hydroxynaphthalin-4-sulfonsäure, 1-Amino-8-hydroxynaphthalin-2,4-disulfonsäure, 1-Amino-8-hydroxynaphthalin-3,6-disulfonsäure, 1-Amino-8-hydroxynaphthalin-4,6-disulfonsäure, 2-Amino-5-hydroxynaphthalin-7-sulfonsäure, 2-Amino-8-hydroxynaphthalin-6-sulfonsäure, 2-Amino-8-hydroxynaphthalin-3,6-disulfonsäure, 2-Amino-5-hydroxynaphthalin-1,7-disulfonsäure, 1-Acetylamino-8-hydroxynaphthalin-3,6-disulfonsäure, 1-Benzoylamino-8-hydroxynaphthalin-3,6-disulfonsäure, 1-Acetylamino-8-hydroxynaphthalin-4,6-disulfonsäure, 1-Benzoylamino-8-hydroxynaphthalin-4,6-disulfonsäure, 1-Acetylamino-5-hydroxynaphthalin-7-sulfonsäure, 2-Methylamino-5-hydroxynaphthalin-7-sulfonsäure, 2-Acetylamino-8-hydroxynaphthalin-6-sulfonsäure oder 2-Methylamino-8-hydroxynaphthalin-6-sulfonsäure.

Von besonderer Bedeutung sind sulfo- und/oder carboxylgruppenhaltige, gegebenenfalls Azogruppen tragende Kupplungskomponenten, die in o- oder p-Stellung zu einer Hydroxy- und/oder Aminogruppe kuppeln und die schon eine reaktive Gruppe X enthalten können.
Als Beispiele für solche Kupplungskomponenten seien beispielsweise genannt:

2-Acetylamino-5-hydroxynaphthalin-7-sulfonsäure, 2-Acetylamino-8-hydroxynaphthalin-6-sulfonsäure, 1-Acetylamino-8-hydroxynaphthalin-3,6-disulfonsäure, 1-Benzoylamino-8-hydroxynaphthalin-3,6-disulfonsäure, 1-Acetylamino-8-hydroxynaphthalin-4,6-disulfonsäure oder 1-Benzoylamino-8-hydroxynaphthalin-4,6-disulfonsäure.

Weiterhin 2-[(5′-Hydroxy-7′-sulfo-)-naphthylamino-2′-]-4,6-dichlortriazin, 2-[(5′Hydroxy-7′-sulfo)-naphthylmethylamino-2′-]-4,6-dichlortriazin, 2-[(8′-Hydroxy-6′-sulfo)-naphthylamino-2′-]-4,6-dichlortriazin, 2-[(8′-Hydroxy-6′-sulfo-)-naphthylmethylamino-2′-]-4,6-dichlortriazin, 2-[(8′-Hydroxy-3′,6′-disulfo-)-naphthylamino-1′-]-4,6-dichlortriazin oder 2-[(8′-Hydroxy-4′,6′-disulfo-)-naphthylamino-1′-]-4,6-dichlortriazin sowie deren Monokondensationsprodukte mit primären und sekundären, aliphatischen und aromatischen Aminen, wie beispielsweise Ammoniak, Methyl- und Äthylamin, Taurin, Glyzin, Sarkosin, $\beta$-Hydroxyäthylamin, Dioxäthylamin, Hydrazin, Anilin, N-Methyl- und N-Äthylanilin, Morpholin, Toluidin, Anisidin, Kresidin, Anilin-o-, m- und p-sulfonsäure, Anilin-2,4- und 2,5-disulfonsäure, o-, m- und p-Aminobenzoesäure, m-, p-Vinylsulfonylanilin, m-, p-Sulfatoäthylsulfonylanilin, N-Methylanthranilsäure oder o-, m-, p-Alkenylsulfonylanilin.
Als Kupplungskomponenten sind weiterhin besonders zu nennen:

1-Amino-8-hydroxynaphthalin-3,6- und 4,6-disulfonsäure sowie deren durch saure Kupplung erhaltene Arylazokupplungsprodukte der Formel:

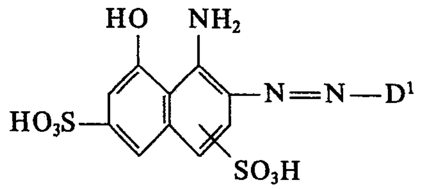

wobei $D^1$ beispielsweise ein Rest folgender Formel sein kann:

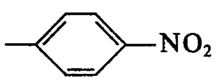 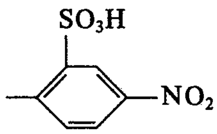 oder 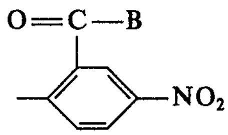 sowie 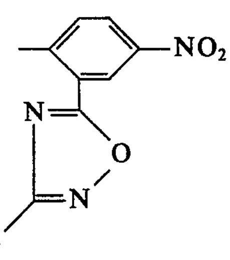

wobei B Hydroxy, $C_1$- bis $C_8$-Alkoxy, gegebenenfalls durch Chlor, Methyl oder Methoxy substituiertes Phenoxy oder gegebenenfalls substituiertes Amino und $B^1$ ein organischer Rest der in der DE-OS 29 10 861 beschriebenen Art sind.

Weiterhin kann $D^1$ eine reaktive Gruppe tragen, wobei für $D^1$ besonders Reste der Formel

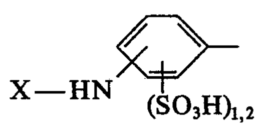

zu nennen sind, in der X ein reaktiver Rest ist.

Kupplungskomponenten der weiteren Reihen sind beispielsweise: Pyrazolone und Aminopyrazole, 2,6-Diaminopyridine, Hydroxy- und Aminopyrimidine, Indole, Barbitursäurederivate oder Acetoacetarylide.

Als Pyrazolon-Kupplungskomponenten sind beispielsweise 3-Methyl-, 3-Carboxy-, 3-Alkoxycarbonyl und 3-Carbonamido-5-pyrazolone zu nennen, die in 1-Stellung Wasserstoff, gegebenenfalls durch Methyl, Äthyl, Fluor, Chlor, Brom, Amino, Trifluormethyl, Methoxy, Äthoxy, Cyano, Phenoxy, Phenylsulfonyl, Methylsulfonyl, Hydroxysulfonyl, Benzoyl, Acetyl, Acetylamino, Nitro, Hydroxyl, Carboxyl, Carbamyl oder Sulfamyl substituierte Phenylreste, durch Hydroxysulfonyl substituierte $\alpha$- oder $\beta$-Naphthylreste oder gegebenenfalls durch Cyano, Hydroxyl oder Carboxyl substituierte $C_1$—$C_4$-Alkylreste tragen können, beispielsweise also:

1-Phenyl-, 1-(2'-Chlorphenyl)-, 1-(2'-Methoxyphenyl)-, 1-(2'-Methylphenyl)-, 1-(2',5'-Dichlorphenyl)-, 1-(2',6'-Dichlorphenyl)-, 1-(2'-Methyl-6'-chlorphenyl)-, 1-(2'-Methoxy-5'-methylphenyl)-, 1-(2'-Chlor-5'-sulfophenyl)-, 1-(2'-Methoxy-5'-sulfophenyl)-, 1-(2'-Methyl-4'-sulfophenyl)-, 1-(2',5'-Dichlor-4'-sulfophenyl)-, 1-(2',5'-Disulfophenyl)-, 1-(2'-Carboxyphenyl)-, 1-(3'-Sulfophenyl)-, 1-(4'-sulfophenyl)-, 1-(3'-sulfamylphenyl)-, 1-(2'-Methoxy-5'-diethylsulfamyl)-, 1-(3'- oder 4'-Aminophenyl)-, 1-(2'-Sulfo-5'-aminophenyl)-, 1-(2'-Methoxy-5'-aminophenyl)-3-carboxy-5-pyrazolon, 1-(2'-Äthylphenyl)-, 1-(3'- oder 4'-Aminophenyl)-, 1-(3'- oder 4'-Nitrophenyl)-, 1-Phenyl-, 1-(3'- oder 4'-Sulfophenyl)-, 1-(2'-Chlorphenyl)-, 1-(2'-Chlor-4'- oder 5'-sulfophenyl)-, 1-(2'-Methyl-4'-sulfophenyl)-, 1-(2',5'-Dichlorphenyl)-, 1-(4',8'-Disulfo-$\beta$-napthyl)-, 1-(6'-Sulfo-$\alpha$-naphthyl)-3-methyl-5-pyrazolon, 1-Phenyl-5-pyrazolon-3-carbonsäureamid, 1-Phenyl-5-pyrazolon-3-carbonsäuremorpholid, 1-Phenyl-5-pyrazolon-3-carbonsäureäthylester, 5-Pyrazolon-3-carbonsäureäthylester, 5-Pyrazolon-3-carbonsäure oder 1-(2'-Hydroxyäthyl)-3-methyl-5-pyrazolon.

Andere aus der Pyrazolreihe stammende Kupplungskomponenten sind beispielsweise 1-Methyl-, 1-Äthyl-, 1-Propyl-, 1-Butyl-, 1-Cyclohexyl-, 1-Benzyl- oder 1-Phenyl-5-aminopyrazol, 1-(4'-Chlorphenyl)-, 1-(4'-Methylphenyl)-5-aminopyrazol oder 1-Phenyl-3-methyl-5-aminopyrazol.

Acetoacetanilide sind vor allem Acetessiganilid und dessen im Phenylkern durch Chlor, Methyl, Äthyl, Methoxy, Äthoxy, Acetylamino, Hydroxysulfonyl, Carboxy, Carbonamido oder Sulfonamido ein- oder mehrfach substituierten Derivate.

Vom Pyridin abgeleitete Kupplungskomponenten sind beispielsweise die in der DE-OS 2 260 827

beschriebenen Derivate.

Als Pyrimidinkupplungskomponenten sind z. B. die in den DE-OS 2 202 820 und 2 308 663 aufgeführten Verbindungen geeignet. Weiterhin sind Barbitursäure und deren N-Substitutionsprodukte zu nennen. Als N-Substituenten sind dabei insbesondere $C_1$- bis $C_4$-Alkyl und gegebenenfalls substituiertes Phenyl anzuführen.

Als Indolkupplungskomponenten sind beispielsweise zu nennen:

2-Methylindol, 2-Phenylindol, 2-Phenylindol-5-sulfonsäure, 1-Methyl-2-phenylindol, 1-(2'-Hydroxyäthyl)-, 1-(2'-Carboxyäthyl)-, 1-(2'-Carbamoyläthyl)-2-methylindol oder -2-phenylindol.

Die Reste D der Diazokomponenten stammen vorwiegend aus der Anilin- und Aminonaphthalinreihe. Als Substituenten für die Reste D kommen z. B. Fluor, Chlor, Brom, Trifluormethyl, Methyl, Äthyl, $C_1$- bis $C_4$-Alkoxy, Phenoxy, Carboxy, Carbonester, Phenyl, gegebenenfalls substituiertes Phenylazo, Cyan, Nitro, $C_1$- bis $C_4$-Alkanoylamino, Benzoylamino, $C_1$- bis $C_4$-Alkylsulfonyl oder Alkenylsulfonyl, Phensulfonyl, gegebenenfalls substituiertes Carbamoyl oder Sulfamoyl, Hydroxy oder Hydroxysulfonyl in Betracht, sowie die in der DE-OS 2 910 861 genannten Oxdiazolylreste.

Einzelne Substituenten sind neben den bereits genannten z. B.:

$OCH_3$, $OC_2H_5$, $OC_3H_7$, $OC_4H_9$, durch Chlor, Brom, Methyl, Methoxy, Äthoxy, Carboxy oder Hydroxysulfonyl substituiertes Phenylazo, $COOCH_3$, $COOC_2H_5$, $COOC_4H_9$, $COOC_2H_4OCH_3$, $COOC_2H_4OH$, $CONH_2$, $CONHCH_3$, $CONHC_2H_5$, $CONHC_3H_7$, $CONHC_4H_9$, $CONHC_6H_5$, $CONHC_6H_4CH_3$, $CON(CH_3)_2$, $CON(C_2H_5)_2$, $CON(C_4H_9)_2$, $CONHC_2H_4OH$, $CON(C_2H_4OH)_2$, $CONHC_2H_4OCH_3$, Pyrrolidinocarbonyl, Piperidinocarbonyl, Morpholinocarbonyl, Piperazinocarbonyl oder N-Methylpiperazinocarbonyl, die entsprechenden Sulfamoylreste, $CH_3CO$, $C_2H_5CO$, $C_3H_7CO$, $C_4H_9CO$, $CH_3SO_2-$, $C_2H_5SO_2-$, $CH_2{=}CH-CH_2SO_2-$, $CH_2{=}CH-SO_2-$, $HOCH_2-CH{=}CH-SO_2-$, $H_3C-CH{=}CH-SO_2-$, $HO_3SOCH_2-CH_2SO_2-$, $ClCH_2-CH_2-SO_2-$,

$$H_3C-\underset{\displaystyle SO_3H}{\underset{|}{CH}}-CH_2-SO_2- \quad \text{oder} \quad HOCH_2-\underset{\displaystyle SO_3H}{\underset{|}{CH}}-CH_2-SO_2-$$

Einzelne Diazokomponenten der Formel $D-NH_2$ sind beispielsweise:

Anilin, o-, m-, p-Toluidin, o-, m-, p-Chloranilin, o-, m-, p-Anisidin, o-, m-, p-Nitroanilin, 2-Nitro-4-methylanilin, 3-Nitro-4-methylanilin, 2-Nitro-4-chloranilin, 2-Methyl-5-nitroanilin, 2-Methyl-4-nitroanilin, 2-Chlor-4-nitroanilin, 4-Nitroanilin-2-methylsulfon, Anilin-o-, m-, p-sulfonsäure, 2-Amino-3-chlorbenzolsulfonsäure, 2-Amino-4-chlorbenzolsulfonsäure, 2-Amino-5-chlorbenzolsulfonsäure, 3-Amino-4-chlorbenzolsulfonsäure, 2-Chlor-5-aminobenzolsulfonsäure, 2-Amino-5-methylbenzolsulfonsäure, 2-Methyl-5-aminobenzolsulfonsäure, 2-Methyl-4-aminobenzolsulfonsäure, 2-Amino-5-methoxybenzolsulfonsäure, 2-Methoxy-5-aminobenzolsulfonsäure, 2-Amino-4-chlor-5-methylbenzolsulfonsäure, 2-Amino-4-methyl-5-chlor-benzolsulfonsäure, 2-Amino-5-nitrobenzolsulfonsäure, 3-Nitro-4-aminobenzolsulfonsäure, Anilin-2,4- und -2,5-disulfonsäure, 2-Amino-4,5-disulfotoluol, 2-Amino-3,5-disulfochlorbenzol, 2-Amino-3,5-disulfotoluol, 2-Amino-3,5-dimethylbenzolsulfonsäure, 4-Amino-2,5-disulfoanisol, 2-Amino-4-acetaminobenzolsulfonsäure, 2-Amino-5-acetaminobenzolsulfonsäure, o-, m-, p-Aminobenzoesäure sowie deren $C_1-C_4$-Alkylester, Anilin-3- und -4-sulfonamid, o- und p-Aminobenzonitril, Acetmetamin- und Acetparaminsäure, Gelb- und Digelbsäure, 2-(3'-Phenyl-1',2',4'-oxdiazolyl-5')-anilin-4-sulfonsäure, 2'-(3'-Methyl-1',2',4'-oxdiazolyl-5')-anilin-4-sulfonsäure, 2-[3'-(2''-Sulfophenyl)-1',2',4'-oxdiazolyl-5']-4-nitroanilin, 2-[3'-(2''-Hydroxysulfonyläthyl)-1',2',4'-oxdiazolyl-5']-4-nitroanilin, 2-[3'-(β-Hydroxysulfonyläthyl)-1',2',4'-oxdiazolyl-5'-]-4-sulfoanilin, 2-(3'-Phenyl-1',2',4'-oxdiazolyl-5')-anilin, 2-(3'-Methyl-1',2',4'-oxdiazolyl-5')-anilin, 4-Allylsulfonylanilin, 3-Allylsulfonylanilin, 2-Allylsulfonylanilin, 4-(Propenyl-1')-sulfonylanilin, 4-Vinylsulfonylanilin, 3-(β-Sulfatoäthyl)-sulfonylanilin, 4-(β-Sulfatoäthyl)-sulfonylanilin, 4-(β-Chloräthyl)-sulfonylanilin, 4-(3'-Hydroxypropenyl-1')-sulfonylanilin, 4-(β-Sulfopropyl)-sulfonylanilin, 4-(β-Sulfo-γ-hydroxypropyl)-sulfonylanilin, 2-Amino-5-sulfobenzoesäure, 3-Amino-6-nitrobenzoesäure, 3-Nitro-4-aminobenzoesäure, 2-[(3'-Amino-4'-sulfo)-phenyl-1']-4,6-dichlortriazin, 2-[(4'-Amino-3'-sulfo)-phenyl-1']-4,6-dichlortriazin, 2-[(3'-Amino-4',6'-disulfo)-phenyl-1']-4,6-dichlortriazin, 2-[(4'-Amino-2',5'-disulfo)-phenyl-1']-4,6-dichlortriazin, 2-Naphthylamin-1-sulfosäure, 2-Naphthylamin-1,5-disulfosäure, 2-Naphthylamin-3,6-disulfosäure, 2-Naphthylamin-4,8-disulfosäure, 2-Naphthylamin-3,6,8-trisulfosäure, 1-Napthylamin-2-sulfosäure, 1-Naphthylamin-3-sulfosäure, 1-Naphthylamin-4-sulfosäure, 1-Naphthylamin-6-sulfosäure, 1-Naphthylamin-7-sulfosäure, 1-Naphthylamin-3,7-disulfosäure, 1-Naphthylamin-3,6,8-trisulfosäure oder 1-Naphthylamin-4,6,8-trisulfosäure.

Die Farbstoffe der Anthrachinonreihe entsprechen vorzugsweise den allgemeinen Formeln III a oder III b

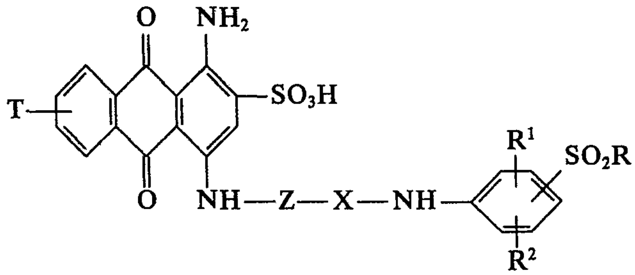

(IIIa)

oder

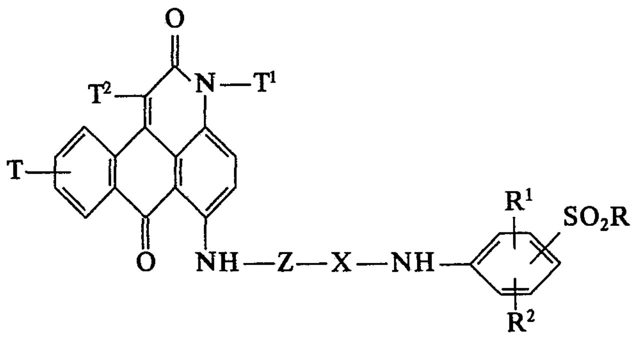

(IIIb)

in denen

T Wasserstoff, Chlor oder Hydroxysulfonyl,
$T^1$ und $T^2$ unabhängig voneinander Wasserstoff, $C_1$- bis $C_4$-Alkyl oder Phenyl und
Z eine direkte Bindung oder eine Alkylen-, Cycloalkylen-, Aralkylen- oder Arylengruppe bedeuten und
R, $R^1$, $R^2$ und X die angegebene Bedeutung haben.

Gruppen Z sind beispielsweise:

$-C_2H_4-$ $-C_3H_6-$ $-C_4H_8-$ 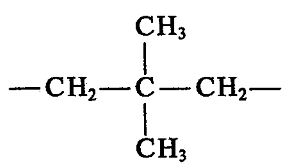 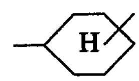

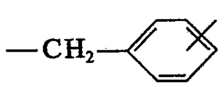 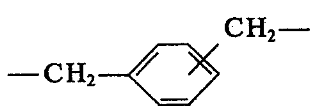 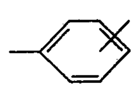 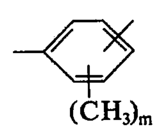 oder 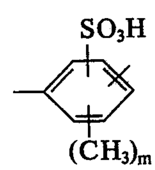

wobei m 1, 2 oder 3 ist.

Die reaktiven Reste X können bei den Azofarbstoffen sowohl im Diazokomponentenanteil als auch in der Kupplungskomponente stehen, sie sind über Stickstoff in Form von —NH— oder —N—Alkyl— gebunden, Alkyl hat dabei vorzugsweise 1 bis 4 C-Atome und kann durch Hydroxy, $C_1$- bis $C_4$-Alkoxy oder Cyan substituiert sein. Die Reste X stammen im einzelnen beispielsweise von folgenden Verbindungen:

Acryloylchlorid, β-Chlorpropionylchlorid, β-Brompropionylchlorid, Chloracetylchlorid, α,β-Dichlorpropionylchlorid, 2,3-Dichlorchinoxalin-5-carbonylchlorid, 2,3-Dichlorchinoxalin-6-carbonylchlorid, 2,3-Dichlorchinazolin-5- oder 6-sulfonylchlorid, 2,4-Dichlorchinazolin-6- oder -7-sulfonylchlorid, 2,4,6-Trichlorchinazolin-7- oder -8-sulfonylchlorid, 2,4,7- oder 2,4,8-Trichlorchinazolin-6-sulfonylchlorid, 2,4-Dichlorchinazolin-6-carbonylchlorid, 2,4-Dichlorpyrimidin-5-carbonylchlorid, 4-Vinylsulfonylanilin, 4-(β-Chloräthyl)-sulfonylanilin, 4-(β-Hydroxyäthyl)-sulfonylanilin, 3- und 4-(β-Sulfatoäthyl)-sulfonylanilin, 1-Phenyl-4-(carbonylchlorid)-4,5-dichlor-6-pyridazon, 2,4,6-Trichlorpyrimidin, 2,4,6-Trichlor-5-methylpyrimidin, 2,4,6-Tribrom-5-cyanpyrimidin, 2,4,5,6-Tetrachlorpyrimidin, 2,4,6-Trifluorpyrimidin, 2,4,6-Trifluor-5-chlorpyrimidin.

Insbesondere seien genannt:

Cyanurfluorid, Cyanurchlorid, Cyanurbromid, 2,4-Dichlor-6-methyltriazin, 2,4-Dichlor-6-phenyltriazin sowie die primären Kondensationsprodukte von Cyanurfluorid, -chlorid und -bromid mit Ammoniak, Aminen, organischen Hydroxy- und Mercaptoverbindungen, also z. B.: Methanol, Äthanol, Isopropanol, Phenol, $\alpha$-Naphthol, $\beta$-Naphthol, Chlorphenolen, Cresolen, sulfonierten Phenolen, Thiophenol, Thioglycolsäure, Methylmercaptan, Dimethyldithiocarbaminsäure, 2-Mercaptobenzthiazol, Thioacetamid, Methylamin, Äthylamin, n-Propylamin, Dimethylamin und Diäthylamin, $\beta$-Hydroxyäthylamin, Di-($\beta$-Hydroxyäthyl)-amin, Piperidin, Morpholin, $\beta$-Methoxyäthylamin, $\beta$-(4-Sulfophenyl)-äthylamin, Aminoessigsäure, N-Methylaminoessigsäure, Taurin, N-Methyltaurin, Anilin, N-Methylanilin, Toluidin, Anisidin, Anilin-2,5-, 2,4- und 3,5-Disulfonsäure, Anilin-o-, m- und p-sulfonsäure, N-Methylanilin-o-, m- und p-Sulfonsäure, o-, m- und p-Aminobenzoesäure, 4- und 5-Sulfo-2-aminobenzoesäure, 2-Aminotoluol-4-sulfonsäure, 5-Amino-2-hydroxybenzoesäure, $\beta$-Aminoäthansulfonsäure, N-Methylaminoäthansulfonsäure, Mono- und Disulfonsäuren von 1-Amino- und 2-Aminonaphthalin, 4-Allylsulfonylanilin, 3-Allylsulfonylanilin, 4-(Propenyl-1')-sulfonylanilin, 4-Vinylsulfonylanilin, 3-(p-Sulfatoäthyl)-sulfonylanilin, 4-($\beta$-Sulfatoäthyl)-sulfonylanilin, 4-($\beta$-Chloräthyl)-sulfonyanilin, 4-(3'-Hydroxypropenyl-1')-sulfonylanilin, 4-($\beta$-Sulfopropyl)-sulfonylanilin, 4-($\beta$-Sulfo-$\gamma$-hydroxypropyl)-sulfonylanilin, 4-Vinylsulfonylanilin, 3-($\beta$-Sulfatoäthyl-sulfonylanilin, 4-($\beta$-Sulfatoäthyl)-sulfonylanilin oder 4-($\beta$-Chloräthyl)-sulfonylanilin.

Reste R sind beispielsweise:

$-CH_2CH{=}CH_2$  $-CH{=}CH-CH_3$  $-CH{=}CH-CH_2Cl$  $-CH{=}CH-CH_2OH$

oder

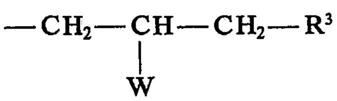

wobei $R^3$ = H, OH oder $C_1$- bis $C_3$-Alkyl und W Hydroxylsulfonyl ist.

Zur Herstellung von Verbindungen der Formel I kann man die Komponenten in an sich bekannter Weise miteinander umsetzen. Beispielsweise kann man eine Diazoniumverbindung eines Amins der Formel IV

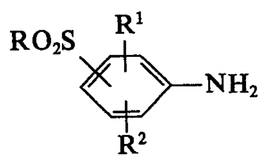

(IV)

wobei R, $R^1$ und $R^2$ die angegebene Bedeutung haben, mit einer Kupplungskomponente der Formel

$H_n-K$

umsetzen; der Rest X kann dabei in der Kupplungskomponente stehen oder nachträglich eingeführt werden. Für diesen Fall entspricht das Amin der Formel IV der Diazokomponente $DNH_2$. Zur Herstellung einer Gruppe von Disazoverbindungen der Formel II, die den Rest D—N=N— enthält, kann man zunächst eine Diazoniumverbindung eines aromatischen Amins der Formel

$NH_2-D$

mit einer zweifach kuppelnden Kupplungskomponente der Formel

$H_n-K$

umsetzen und anschließend eine Diazoniumverbindung eines Amins der Formel

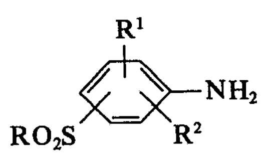

nach bekannten Methoden aufkuppeln; dabei kann die reaktive Gruppe X bereits in der Aminkompo-

nente $NH_2-D$ stehen oder nachträglich eingeführt werden.

Besondere Bedeutung kommt der Herstellung einer weiteren Gruppe von Disazoverbindungen der Formel II zu, die den Rest D—N=N— enthält. Man kann dabei zunächst eine Diazoniumverbindung eines Amins der Formel

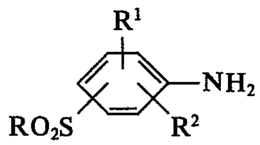

mit einer zweifach kuppelnden Kupplungskomponente der Formel

$H_n-K$

umsetzen und anschließend ein diazotiertes aromatisches Amin der Formel

$NH_2-D$

nach bekannten Methoden aufkuppeln; dabei kann die reaktive Gruppe X bereits in der Aminkomponente $NH_2-D$ stehen oder nachträglich eingeführt werden.

Die Herstellungsmethoden, d. h. auch Variationen der angegebenen Herstellungsweise sind im Prinzip bekannt und bieten gegenüber diesen Methoden keine Besonderheiten.

Einzelheiten der Herstellung können den Beispielen entnommen werden, in denen sich Angaben über Teile und Prozente, sofern nicht anders vermerkt, auf das Gewicht beziehen.

Die Verbindungen der Formel I eignen sich zum Färben von hydroxylgruppenhaltigen Substraten und von Polyamiden und ergeben je nach Konstitution gelbe bis blaue Färbungen, die sich im allgemeinen durch gute Ausgiebigkeit und gute Echtheiten, wie Naß- und Lichtechtheit auszeichnen. Als Substrate sind insbesondere Baumwolle und Wolle zu nennen.

Als Färbeverfahren kommen je nach reaktivem Rest alle gebräuchlichen Verfahren in Betracht.

Vergleichbare Farbstoffe sind schon aus der FR-A-1 490 242 und der CH-A-412 478 bekannt. Demgegenüber weisen die erfindungsgemäßen Farbstoffe beim Färben von Baumwolle Vorteile in der Sodakochechtheit auf. Die FR-A-13 26 789 betrifft Küpenfarbstoffe, die wegen des Fehlens von Sulfogruppen ein anderes färberisches Verhalten zeigen und mit den erfindungsgemäßen Verbindungen nicht vergleichbar sind.

Von besonderer Bedeutung ist z. B. eine Gruppe von Verbindungen der Formel I a

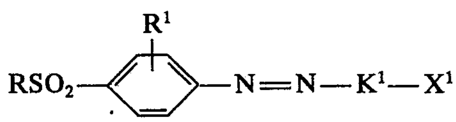

in der

- $K^1$ der Rest einer sulfonsäuregruppenhaltigen Kupplungskomponente der Aminonaphtholsulfonsäure-, Aminonaphthalinsulfonsäure — oder durch Arylazo substituierten Aminonaphtholsulfonsäurereihe oder ein Pyrazolonrest und
- $X^1$ ein Triazinylaminorest ist und
- R und $R^1$ die angegebene Bedeutung haben.

Vorzugsweise ist

$$R-CH_2CH{=}CH_2 \quad -CH_2-\underset{\displaystyle SO_3H}{\underset{|}{CH}}-CH_3 \quad -CH{=}CH-CH_3 \quad -CH{=}CH-CH_2OH$$

oder

$$-CH_2-\underset{\displaystyle SO_3H}{\underset{|}{CH}}-CH_2-OH$$

Bevorzugte Reste $K^1$ stammen beispielsweise von folgenden Verbindungen:

2-Amino-5-hydroxynaphthalin-7-sulfonsäure, 2-N-Methylamino-5-hydroxynaphthalin-7-sulfonsäure, 2-N-Methylamino-8-hydroxynaphthalin-6-sulfonsäure, 2-Amino-8-hydroxynaphthalin-6-sulfonsäure, 1-Amino-8-hydroxynaphthalin-3,6- und 4,6-disulfonsäure, 1-Amino-2-(2'-sulfo-4'-aminophenylazo)-8-hydroxy-3,6-disulfonsäure oder 1-Amino-2-(2'-sulfo-5'-aminophenylazo)-8-hydroxy-3,6-disulfonsäure.

Bevorzugte Reste $X^1$ sind beispielsweise:

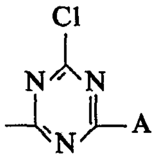

wobei A z. B.

Cl  $OCH_3$  $O-C_2H_5$  $O-C_3H_7(i)$  $O-C_6H_5$  $CH_3$  $C_6H_5$  $NH_2$  $NH-C_6H_5$

$NH-C_6H_4-SO_3H$  $NH-C_{10}H_6-SO_3H$  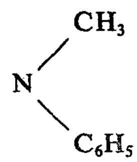  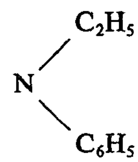  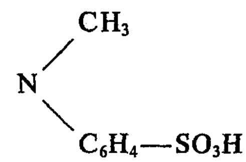

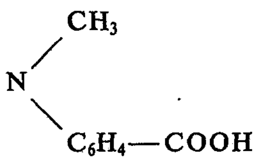  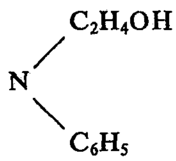  $NH-C_6H_4-SO_2-CH_3-CH=CH_2$

$NH-C_6H_4-SO_2-CH=CH-CH_3$  $NH-C_6H_4-SO_2-CH=CH-CH_2OH$

$NH-C_6H_4-SO_2-CH=CH-CH_2Cl$  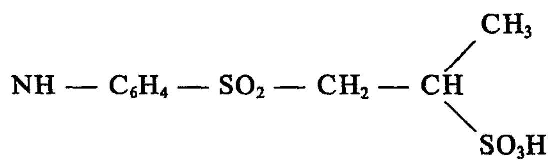

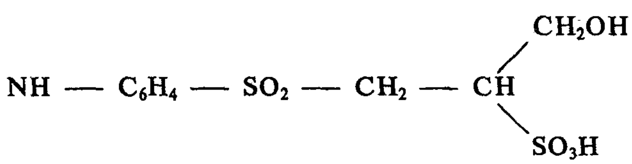  $NH-C_6H_4-SO_2-CH=CH_2$

$NH-C_6H_4-SO_2-CH_2-CH_2-O-SO_3H$ oder $NH-C_6H_4-SO_2-CH_2-CH_2Cl$

ist.

Weiterhin sind bevorzugt:

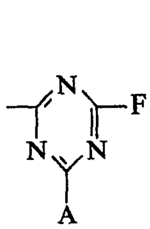 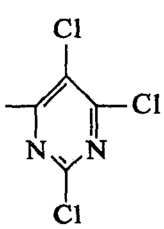 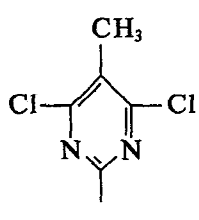 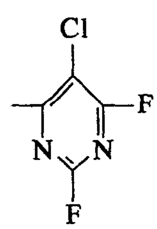 oder 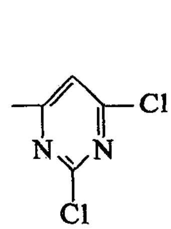

Allgemein bevorzugt sind Disazofarbstoffe der Formel I a. Eine weitere Gruppe von bevorzugten Farbstoffen entspricht der allgemeinen Formel I b

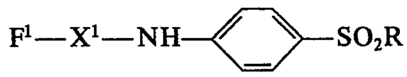 (Ib)

in der

$F^1$ der Rest eines Mono- oder Disazofarbstoffes ist und
$X^1$ und R die angegebene Bedeutung haben.

Die Reste $F^1$ entsprechen vorzugsweise den Formeln

a) Naphtholsulfosäure ← Diazokomponente –NH–
b) Aminonaphtholsulfosäure ← Diazokomponente –NH–
c) Aminonaphthalinsulfosäure ← Diazokomponente –NH–
d) Diazokomponente → Aminonaphtholsulfosäure ← Diazokomponente –NH–
e) Diazokomponente → Pyrazolon –NH–

Die Diazokomponenten enthalten vorzugsweise Reste der Formeln

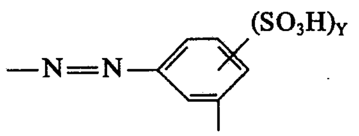
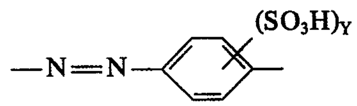
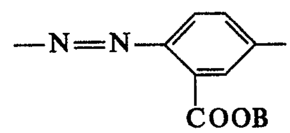

sowie

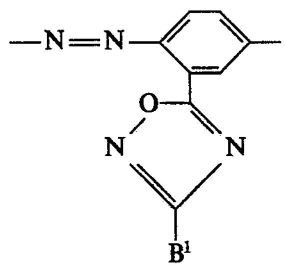

wobei Y die Zahlen 1 oder 2 bedeutet und B und $B^1$ die angegebene Bedeutung haben.
Weiterhin bevorzugt sind Farbstoffe der allgemeinen Formel I c

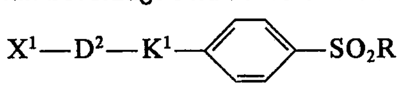 (Ic)

in der

$D^2$ der Rest einer Diazokomponente der Anilinreihe ist, die Kupplungskomponente $K^1$ aus der Pyrazolonreihe stammt und R die angegebene Bedeutung hat.

Die Diazokomponente D enthält vorzugsweise Reste der Formeln

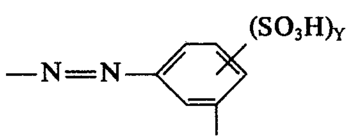
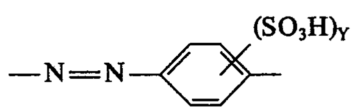
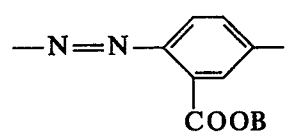

sowie

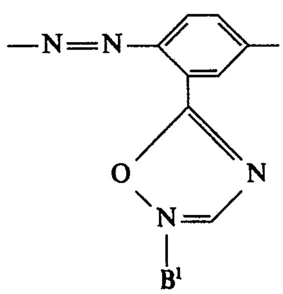

wobei

Y die Zahlen 1 oder 2 bedeutet und
B und $B^1$ die angegebene Bedeutung haben.

Als besonders wertvolle Kupplungskomponenten bei den Farbstoffen der Formel I c seien z. B. genannt:

1-(4'-Allylsulfonylphenyl)-3-carboxypyrazolon-5, 1-(3'-Allylsulfonylphenyl)-3-carboxypyrazolon-5, 1-[4'-(β-Sulfopropyl)-sulfonyl]-3-carboxypyrazolon-5, 1-[4'-(β-Sulfo-γ-hydroxypropyl)-sulfonylphenyl]-3-carboxypyrazolon-5, 1-[4'-Propenyl-1")-sulfonylphenyl]-3-carboxypyrazolon-5, 1-[4'-(3"-Hydroxypropenyl-1")-sulfonylphenyl]-3-carboxypyrazolon-5 sowie die entsprechenden in 3-Stellung durch Carbonamido oder Methyl substituierten Verbindungen.

Die oben genannten Pyrazolone können wie folgt hergestellt werden:

Zu 0,5 Mol eines diazotierten Amins der allgemeinen Formel

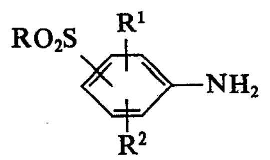

werden 107 Teile Acetylbernsteinsäuredimethylester, der in 700 Teilen Wasser mit Hilfe eines handelsüblichen Netzmittels emulgiert wurde, gegeben. Durch Einstellen eines schwach sauren pH-Bereiches wird die Reaktion zu Ende geführt. Die Reaktionsmischung wird mit 120 Teilen Natriumhydroxid versetzt und bis zur Vollständigkeit der Cyclisierung bei pH 13 gerührt. Zur Herstellung der erfindungsgemäßen Farbstoffe können sowohl die im stark sauren pH-Bereich isolierten Pyrazolone selbst, als auch die rohen Syntheselösungen eingesetzt werden.
Daneben können die oben genannten Pyrazolone auch wie folgt dargestellt werden:

0,25 Mol eines Hydrazins der allgemeinen Formel

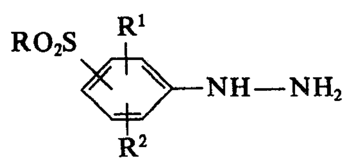

0,25 Mol Acetessigsäureäthylester und 250 Teile Äthanol werden zwei Stunden zunächst bei 50° C, dann 2 Stunden bei 80° C erhitzt. Man destilliert das Lösungsmittel ab und löst den Rückstand in 120 Teilen Essigsäureäthylester. Nach dem Abkühlen wird das gebildete 3-Methylpyrazolon abgesaugt und mit Isopropanol gewaschen.

Beispiel 1

Die neutrale Lösung aus 18,8 Teilen 1,3-Phenylendiamin-4-sulfonsäure in 330 Teilen Wasser wird einer Suspension von 19,1 Teilen Cyanurchlorid in 200 Teile Eiswasser zugesetzt. Der pH-Wert der Suspension wird mit Soda bei 7 und die Temperatur bei 0° C gehalten. Nach Beendigung der Kondensation wir mit 50 Teilen Salzsäure (d = 1,09) und 6,9 Teilen Natriumnitrit in 30 Teilen $H_2O$ versetzt und 2 Stunden bei 0—3° C gerührt. Die Diazokomponente wird mit einer neutralen Lösung von 32 Teilen 1-(4'-Allylsulfonylphenyl)-3-carboxypyrazolon-5 in 200 Teilen Wasser versetzt und die Kupplung bei pH 6—7 durch Zugabe von Trinatriumphosphat zu Ende geführt. Die Ausfällung des Farbstoffes wird durch Zugabe von Natriumchlorid vervollständigt. Nach der Isolierung und Trocknung erhält man 70 Teile eines gelben Pulvers, das Baumwolle in brillanten, grünstichig gelben Farbtönen färbt.

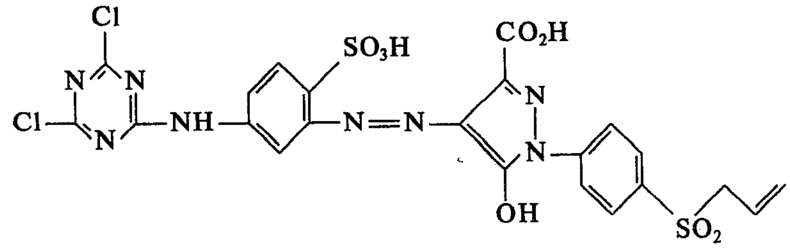

### Beispiel 2

Einen Farbstoff mit ähnlichen Eigenschaften erhält man, wenn statt der in Beispiel 1 verwendeten Kupplungskomponente 1-(2'-Chlor-4-allylsulfonylphenyl)-3-carboxypyrazolon-5 eingesetzt wird.

### Beispiel 3

Zu einer neutralen Lösung von 32 Teilen 1-(4'-Allylsulfonylphenyl)-3-carboxypyrazolon-5 in 200 Teilen Wasser werden 21,8 Teile diazotierte 4-Nitroanilin-2-sulfosäure gegeben. Der pH der Mischung wird bis zur Vollständigkeit der Kupplung bei 2—3 gehalten und danach auf 7 angehoben. Nun wird mit 13 Teilen Natriumsulfid in der üblichen Weise reduziert und danach der Sulfidüberschuß mit 24 Teilen Wasserstoffperoxid (50%ig) zerstört. Die auf 0° C gekühlte Reaktionslösung wird mit 18,7 Teilen Cyanurchlorid in 200 Teilen Eiswasser versetzt, und der pH durch Zugabe von 10%iger Sodalösung bei 4—5 gehalten. Sobald keine freien Aminogruppen mehr nachweisbar sind, werden 18,5 Teile 4,4'-Diaminostilben-2,2'-disulfonsäure zugegeben. Das Gemisch wird 3 Stunden bei 30—40° C in neutralem pH-Bereich, der durch Zugabe von verdünnter Natronlauge gehalten wird, gerührt. Der nach Fällung mit Kaliumchlorid und Trocknung bei 60° C im Vakuum erhaltene Farbstoff färbt Baumwolle in brillanten, rostichig gelben Farbtönen.

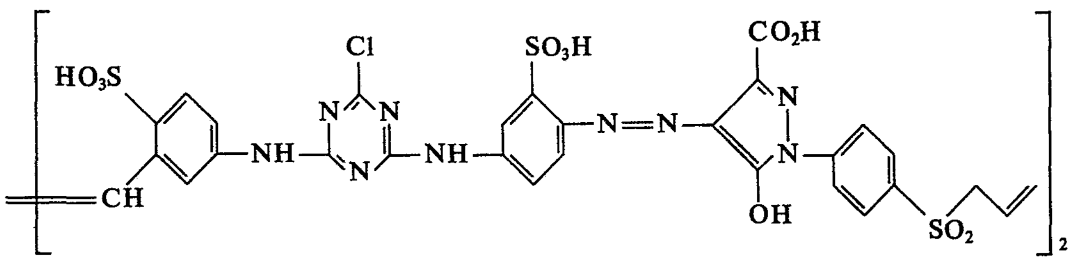

### Beispiel 4

Einen Farbstoff mit ähnlichen Eigenschaften erhält man, wenn statt der in Beispiel 3 verwendeten Kupplungskomponente 1-(2'-Methyl-4'-allylsulfonylphenyl)-3-carboxypyrazolon-5 eingesetzt wird.

### Beispiel 5

300 ml einer neutralen Lösung des Additionsproduktes von 21,4 Teilen 2-Amino-5-hydroxynaphthalin-7-sulfonsäure und 22,1 Teilen 4-Allylsulfonylphenylisocyanat werden mit 25 Teilen Natriumacetat versetzt. Anschließend wird die salzsauer diazotierte Suspension des Monokondensationsproduktes aus 19,6 Teilen 1,3-Phenylendiamin-4-sulfonsäure und 19,8 Teilen Cyanurchlorid bei 0—5° C zugefügt und mit Natriumbicarbonat bei pH 5—5,5 gekuppelt. Das Reaktionsgemisch wird danach mit der neutralen Lösung von 17,3 Teilen Anilin-3-sulfonsäure versetzt und bei 50° C und pH 7 gerührt. Der entstandene Monochlortriazinfarbstoff wird abgesaugt und getrocknet. Er färbt Baumwolle in brillanten orangen Tönen.

### Beispiel 6

Ersetzt man die in Beispiel 5 verwendete 2-Amino-5-hydroxy-naphthalin-7-sulfonsäure durch 2-Amino-8-hydroxynapthalin-6-sulfonsäure, so erhält man einen Farbstoff, der Baumwolle in scharlachroten Tönen färbt.

### Beispiel 7

Die salzsauer diazotierte Suspension des Monokondensationsproduktes auf 19,8 Teilen Cyanurchlorid und 19,6 Teilen 1,3-Phenylendiamin-4-sulfonsäure wird bei 0—5° C zu 200 Teilen einer neutralen Lösung des Additionsproduktes von 29,7 Teilen 1-Amino-8-hydroxynapthalin-3,6-disulfonsäure und 22,1 Teilen 4-Allylsulfonylphenylisocyanat gegeben und mit Trinatriumphosphat bei pH 4—5 gekuppelt. Der Farbstoff wird aus neutraler Lösung mit Siedesalz abgeschieden und durch Zerstäubungstrocknung getrocknet. Man erhält ein dunkelrotes Pulver, das Baumwolle in brillanten, blaustichig roten Tönen mit guter Naßechtheit färbt.

Beispiel 8

Die salzsauer diazotierte Suspension von 10,9 Teilen 4-Nitranilin-2-sulfonsäure wird zur neutralen Lösung von 1-Benzoylamino-8-hydroxynaphthalin-4,6-disulfonsäure gegeben und bei pH 2 gekuppelt. Der rote Azofarbstoff wird bei 50° C mit 6,2 Teilen Schwefelnatrium (60%ig) reduziert, anschließend das überschüssige Sulfid mit 10 Teilen Wasserstoffsuperoxid (50%ig) oxidiert. Das abgekühlte, schwach saure Reaktionsgemisch wird mit 9,6 Teilen Cyanurchlorid versetzt und bei pH 6 acyliert. Anschließend werden 10,3 Teile 4-Allylsulfonylanilin zugefügt und bei 50—60° C und pH 6,5 kondensiert. Aus neutraler Lösung wird der Farbstoff mit Siedesalz gefällt und getrocknet. Er färbt Baumwolle in violetten Tönen mit guter Naßechtheit.

Beispiel 9

Ersetzt man die in Beispiel 8 verwendete 1-Benzoylamino-8-hydroxynaphthalin-4,6-disulfonsäure durch 1-Benzoylamino-8-hydroxynaphthalin-3,6-disulfonsäure, so erhält man einen Farbstoff mit ähnlichen Eigenschaften.

Beispiel 9

Das Monokondensationsprodukt aus 18,8 Teilen 1,3-Phenylendiaminsulfonsäure und 19 Teilen Cyanurchlorid wird salzsauer diazotiert, mit einer Suspension von 23,7 Teilen 2-Amino-8-hydroxynaphthalin-6-sulfonsäure versetzt und sauer gekuppelt. Es werden 19,7 Teile 4-Allylsulfonylanilin zugeführt und bei 50—60° C und pH 6—7 kondensiert. Aus neutraler Lösung wird der Farbstoff mit Siedesalz gefällt und getrocknet. Auf Wolle erhält man brillante, gelbstichig rote Färbungen mit guter Naß- und Lichtechtheit.

Beispiel 10

Ersetzt man das in Beispiel 9 verwendete 4-Allylsulfonylanilin durch 4-(β-Sulfopropyl)-sulfonylanilin, so erhält man einen Farbstoff mit ähnlichen Eigenschaften.

In der folgenden Tabelle sind weitere, der allgemeinen Formel

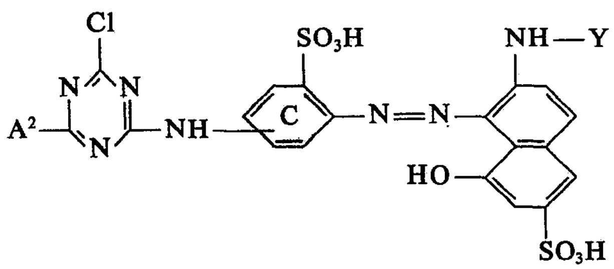

entsprechende Farbstoffe aufgeführt:

Tabelle 1

| Bsp. | $A^2$ | Verknüpfung im Ring C | Y | Farbton |
|---|---|---|---|---|
| 11 | 3-Allylsulfonylanilin | 1,3— | $-C_2H_4OH$ | blaustichig rot |
| 12 | 4-Allylsulfonylanilin | 1,3— | $-C_2H_4OH$ | blaustichig rot |
| 13 | 4-Allylsulfonylanilin | 1,3— | $-CH_3$ | blaustichig rot |
| 14 | 4-Allylsulfonylanilin | 1,4— | $-C_2H_4OH$ | bordeaux |
| 15 | 4-Allylsulfonylanilin | 1,4— | $-CH_3$ | bordeaux |

Beispiel 16

Zu einer salzsauer diazotierten Lösung von 101,5 Teilen 4-Allylsulfonylanilin werden 1200 Teile einer neutralen Lösung von 160 Teilen 1-Amino-8-hydroxynaphthalin-3,6-disulfonsäure in 1000 Teilen Eis-/Wasser-Mischung getropft und über Nacht bei pH 1 gekuppelt. Zu dem dunkelroten Monoazofarbstoff wird die salzsauer diazotierte Suspension des Monokondensationsproduktes aus 97,8 Teilen 1,3-Phenylendiamin-4-sulfonsäure und 99 Teilen Cyanurchlorid gegeben und mit 220 Teilen Trinatriumphosphat · 12 $H_2O$ bei pH = 6,5—7 gekuppelt. Es wird klärfiltriert und der Farbstoff mit Siedesalz abgeschieden. Das Preßgut wird durch Zerstäubungstrocknung getrocknet. Man erhält ein schwarzes Pulver, das Baumwolle in tiefen Marineblautönen färbt.

Beispiel 17

Einen ähnlichen Farbstoff erhält man, wenn das Reaktionsgemisch des Farbstoffs aus Beispiel 16 mit 120 Teilen conc. $NH_3$ bei 50° C behandelt wird.

Beispiel 18

Einen ähnlichen Farbstoff wie in Beispiel 17 erhält man, wenn anstelle der in Beispiel 16 verwendeten 1-Amino-8-hydroxynaphthalin-3,6-disulfonsäure als Kupplungskomponente 1-Amino-8-hydroxynaphthalin-4,6-disulfonsäure eingesetzt wird. Der Farbstoff färbt Wolle in tiefen Marineblautönen mit hoher Lichtechtheit.

Beispiel 19

Die Suspension des durch saure Kupplung von 10,2 Teilen 4-Allylsulfonylanilin auf 16 Teile 1-Amino-8-hydroxynaphthalin-3,6-disulfonsäure entstandenen Monoazofarbstoffs wird mit der salzsauer diazotierten Suspension von 11 Teilen 4-Nitroanilin-2-sulfonsäure versetzt und durch Zugabe von 2n Natriumcarbonatlösung der pH-Wert auf 6,5—7 gestellt und ausgekuppelt. Es wird mit 5,8 Teilen Schwefelnatrium bei 40° C reduziert, mit 8 Teilen Wasserstoffsuperoxyd versetzt und 1 Stunde gerührt. Die neutrale Lösung wird bei 5—10° C mit 9,3 Teilen Cyanurchlorid versetzt und der Acylierungs-pH-Wert mit 2n Natriumcarbonatlösung bei 6 gehalten. Man neutralisiert mit Ammoniak und versetzt mit 12 Teilen conc. Ammoniak bei 50° C. Aus neutraler Lösung wird der Farbstoff mit Siedesalz abgeschieden und getrocknet. Man erhält ein schwarzes Pulver, das Baumwolle in tiefen grünstichig blauen Tönen färbt.

In der folgenden Tabelle sind weitere Farbstoff der allgemeinen Formel

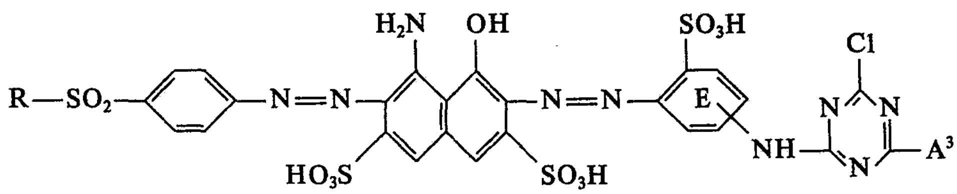

aufgeführt, die analog hergestellt werden:

Tabelle 2

| Bsp. | R | Verknüpfung in Ring E | $A^3$ | Farbton |
|---|---|---|---|---|
| 20 | $CH_2{=}CH{-}CH_2{-}$ | 1,3- | Anilin-3-sulfonsäure | marineblau |
| 21 | $CH_2{=}CH{-}CH_2{-}$ | 1,3- | Anilin-4-sulfonsäure | marineblau |
| 22 | $CH_2{=}CH{-}CH_2{-}$ | 1,3- | 4-Methylaminobenzolsulfonsäure | marineblau |
| 23 | $CH_2{=}CH{-}CH_2{-}$ | 1,3- | Anilin-2-carbonsäure | marineblau |
| 24 | $CH_2{=}CH{-}CH_2{-}$ | 1,3- | Anilin-3-carbonsäure | marineblau |
| 25 | $CH_2{=}CH{-}CH_2{-}$ | 1,3- | Anilin-4-carbonsäure | marineblau |
| 26 | $CH_2{=}CH{-}CH_2{-}$ | 1,3- | Anilin-2,5-disulfonsäure | marineblau |
| 27 | $CH_2{=}CH{-}CH_2{-}$ | 1,3- | Anilin-2,4-disulfonsäure | marineblau |
| 28 | $CH_2{=}CH{-}CH_2{-}$ | 1,3- | Anilin | marineblau |
| 29 | $CH_2{=}CH{-}CH_2{-}$ | 1,3- | N-Methylanilin | marineblau |
| 30 | $CH_2{=}CH{-}CH_2{-}$ | 1,3- | 2-(N-Methylamino)-benzolcarbonsäure | marineblau |
| 31 | $CH_2{=}CH{-}CH_2{-}$ | 1,3- | N-Methyltaurin | marineblau |
| 32 | $CH_2{=}CH{-}CH_2{-}$ | 1,3- | o-Toluidin | marineblau |
| 33 | $CH_2{=}CH{-}CH_2{-}$ | 1,3- | 1-Naphthylamin-4-sulfonsäure | marineblau |
| 34 | $CH_2{=}CH{-}CH_2{-}$ | 1,3- | 1-Naphthylamin-6-sulfonsäure | marineblau |
| 35 | 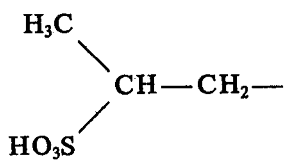 | 1,3- | Chlor | marineblau |
| 36 | 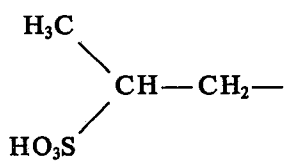 | 1,3- | N-Methylanilin | marineblau |
| 37 | 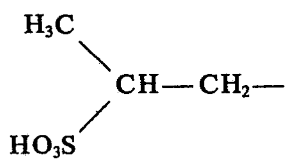 | 1,3- | 4-Allylsulfonylanilin | marineblau |

Beispiel 38

530 Teile 1-Amino-2-sulfo-4-(2',4',6'-trimethyl-3'-amino-5-sulfophenylamino)-anthrachinon werden in 5000 Teilen Wasser suspendiert und mit 94 Teilen 50%iger Natronlauge auf pH 7 gestellt.

Bei 0–5° C gibt man dann eine feine Suspension von 205 Teilen Cyanurchlorid in 1200 Teilen Eiswasser zu. Der pH-Wert des Reaktionsgemisches wird durch Zugabe von insgesamt 460 Teilen einer 10%igen Sodalösung 4 Stunden lang bei 6–7 gehalten.

Man fügt danach eine Suspension von 258 Teilen 4-Allylsulfonylanilin in 2000 Teilen Wasser zu, erhöht die Temperatur auf 35–40° C und hält den pH mit 440 Teilen 10%iger Sodalösung bei 6–7. Das Reaktionsgemisch wird 8 Stunden nachgerührt und nach dem Abkühlen filtriert.

Der Farbstoff der Formel

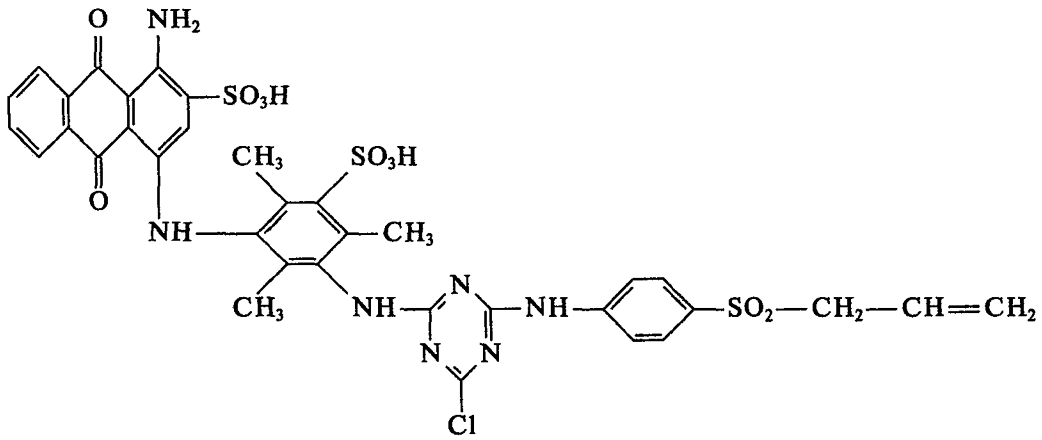

wird durch Zugabe von 2000 Teilen NaCl ausgefällt, abgesaugt und getrocknet. Man isoliert 998 Teile des salzhaltigen Farbstoffs, der Wolle und Baumwolle in rotstichig blauen Tönen färbt.

Beispiel 39

Man verfährt wie in Beispiel 38. Anstelle von 4-Allylsulfonylanilin setzt man 4-(Propenyl-1')-sulfonylanilin ein. Man isoliert 1050 Teile des salzhaltigen Farbstoffs der Formel

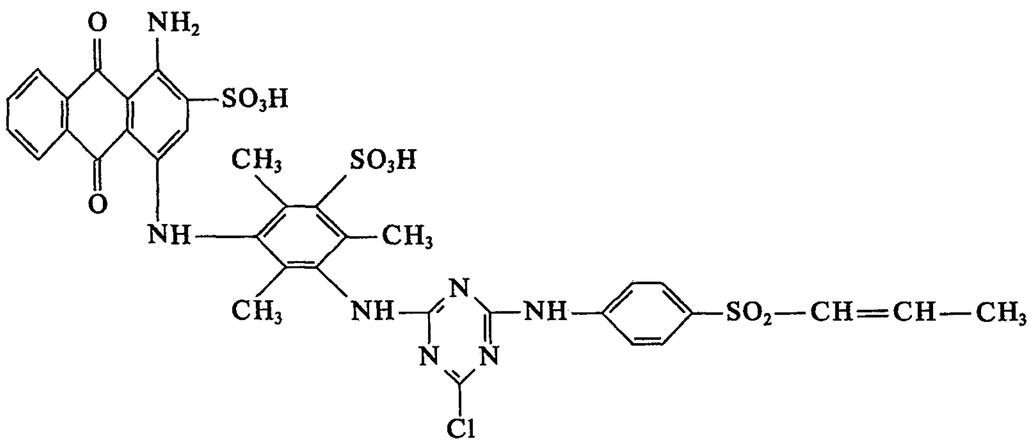

der auf Wolle ähnliche Färbungen wie der Farbstoff aus Beispiel 38 ergibt.

Beispiel 40

Man verfährt wie in Beispiel 38. Als Ausgangsprodukt dient 1-Amino-2-sulfo-4-(3'-sulfo-4'-aminophenylamino)-anthrachinon. Man isoliert einen Farbstoff der Formel

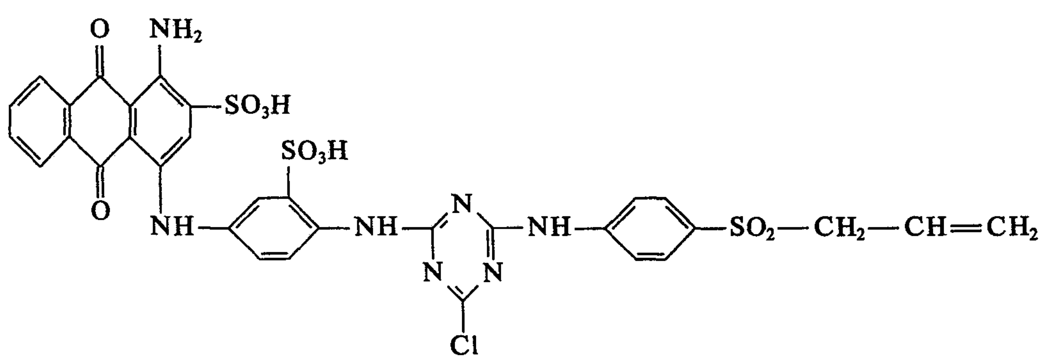

der Wolle in grünstichig blauen Tönen färbt.

Beispiel 41

Man verfährt wie in Beispiel 38. Als Ausgangsprodukt dient 1-Amino-2-sulfo-4-(3'-amino-4'-sulfophenylamino)-anthrachinon. Man isoliert den Farbstoff der Formel

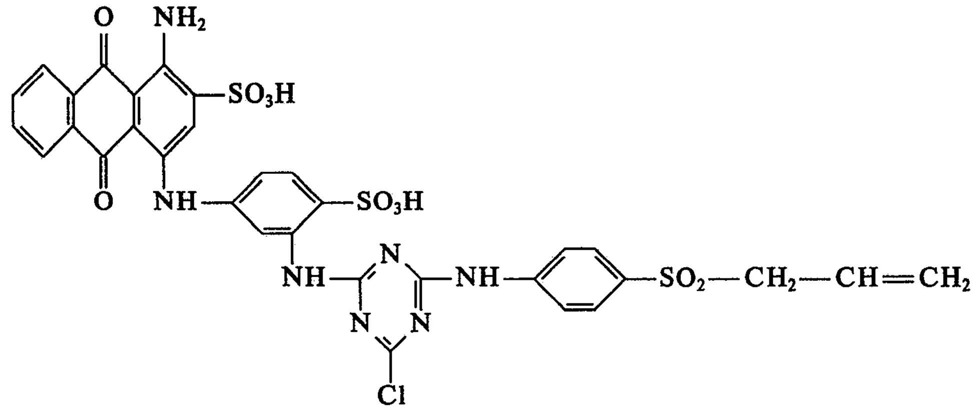

der Wolle in neutralen Blautönen färbt.

Beispiel 42

Die salzsauer diazotierte Lösung von 19,7 Teilen 4-Allylsulfonylanilin wird bei 0—5° C und pH = 5—6 zu einer Lösung von 29,9 Teilen 1-(2'-Sulfo-5'-aminophenyl)-3-carboxy-5-pyrazolon gegeben und gekuppelt. Der gelbe Monoazofarbstoff wird anschließend mit einer Suspension von 18,8 Teilen Cyanurchlorid versetzt und bei pH = 6 acyliert. Der gebildete Dichlortriazinfarbstoff wird isoliert; er entspricht der Formel:

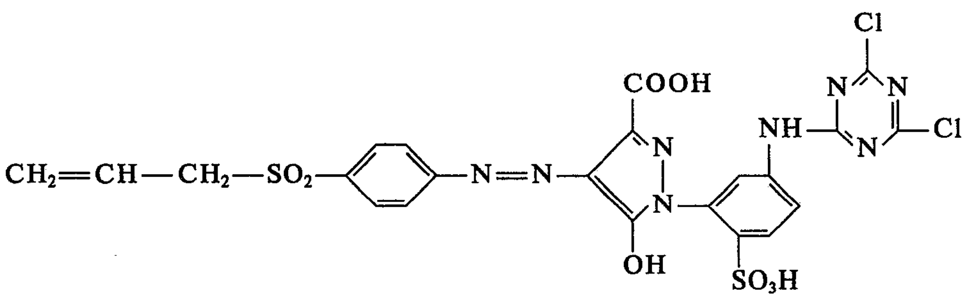

Die salzsauer diazotierte Suspension von 21,8 Teilen 2-Sulfo-4-nitroanilin wird zu einer Suspension von 31,6 Teilen 1-Amino-8-hydroxynaphthalin-3,6-disulfonsäure gegeben und stark sauer gekuppelt. Der rote Monoazofarbstoff wird mit der diazotierten Suspension von 35,7 Teilen Digelbsäure versetzt und schwach sauer bis schwach alkalisch zum Trisazofarbstoff gekuppelt. Man reduziert die Nitrogruppe mit 12 Teilen Schwefelnatrium bei 40° C und entfernt den Sulfidionenüberschuß mit 16 Teilen Wasserstoffsuperoxyd. Der gebildete Farbstoff entspricht der Formel:

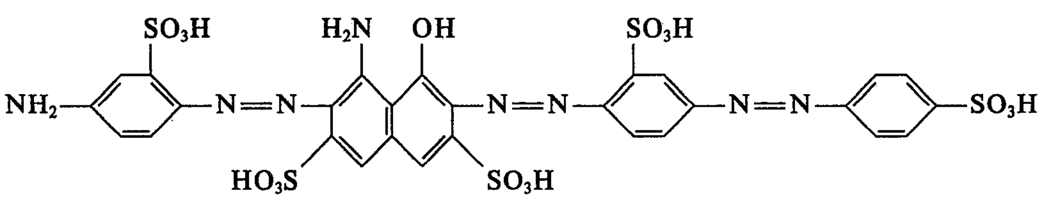

Man vereinigt diesen mit einer Suspension von 50,1 Teilen des oben genannten Monoazofarbstoffs, erwärmt auf 50° C und kondensiert bei pH 6. Durch Zugabe von Kaliumchlorid wird der erhaltene Farbstoff abgeschieden und getrocknet. Er färbt Baumwolle in gelbstichig grünen Tönen mit guter Lichtechtheit und sehr guter Naßechtheit.

Beispiel 43

Die salzsauer diazotierte Lösung von 19,7 Teilen 4-Allylsulfonylanilin wird zu einer neutralen wäßrigen Lösung von 22 Teilen eines Gemisches aus 1-Amino-naphthalin-6- und -7-sulfonsäure gegeben und bei pH 6—7 gekuppelt. Das Reaktionsgemisch wird salzsauer weiterdiazotiert und zu einer wäßrigen Suspension von 58,1 Teilen des sekundären Kondensationsproduktes aus 31,9 Teilen 1-Amino-8-hydroxynaphthalin-4,6-disulfonsäure, 18,8 Teilen Cyanurchlorid und 10,7 Teilen N-Methylanilin gegeben und neutral gekuppelt. Der ausgefallene Farbstoff wird abgesaugt und getrocknet. Er färbt Wolle in tiefen schwarzen Tönen.

Analog zu den beschriebenen Methoden lassen sich auch die in der folgenden Tabelle aufgeführten Farbstoffe herstellen, die Baumwolle im angegebenen Farbton färben.

| Beispiel | | Farbton |
|---|---|---|
| 44 | 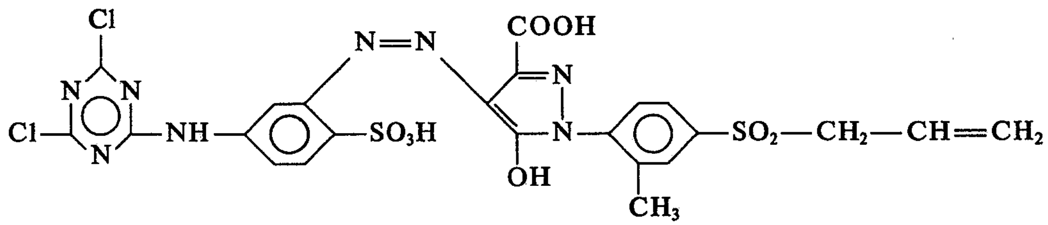 | gelb |
| 45 | 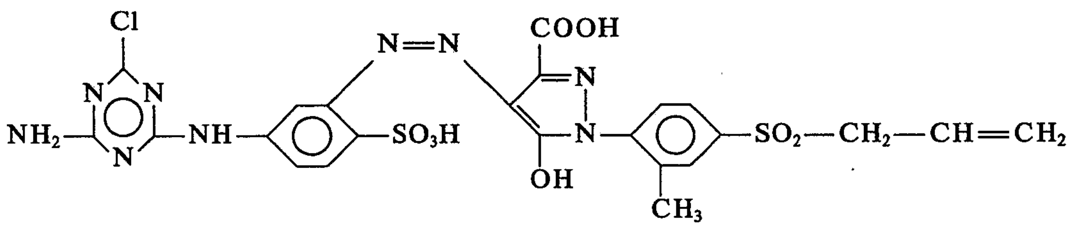 | gelb |
| 46 | 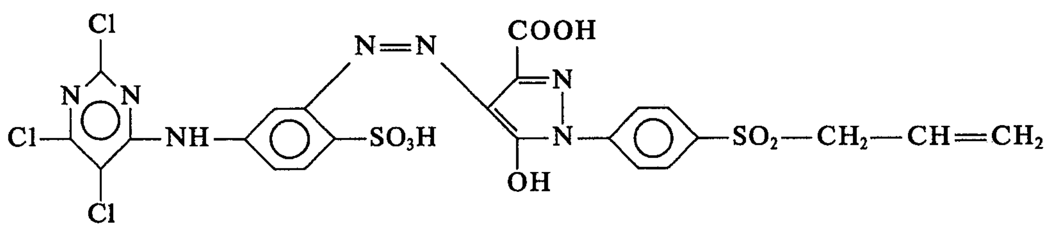 | gelb |
| 47 | 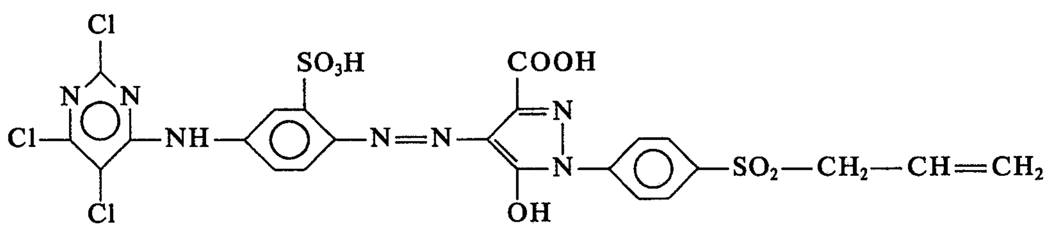 | orange |

(Fortsetzung)

| Beispiel | | Farbton |
|---|---|---|
| 48 | 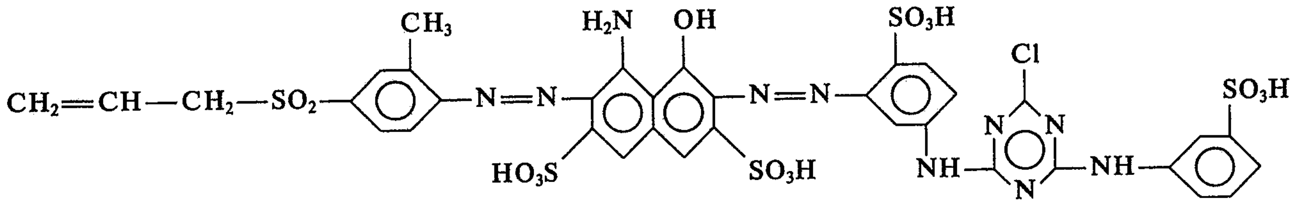 | marineblau |
| 49 | 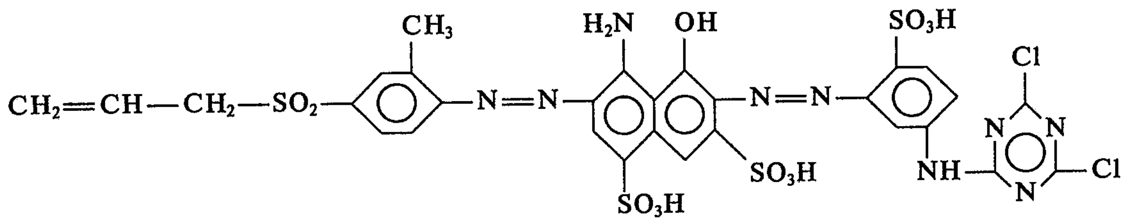 | marineblau |
| 50 | 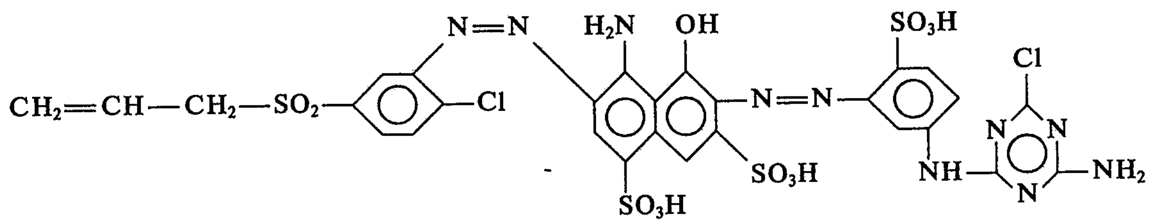 | marineblau |
| 51 | 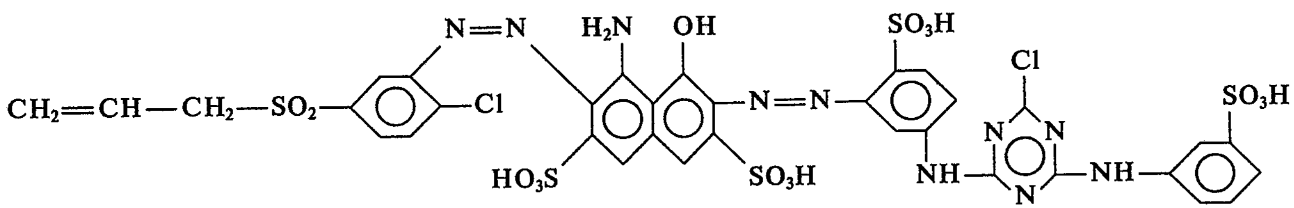 | marineblau |

(Fortsetzung)

| Beispiel | | Farbton |
|---|---|---|
| 52 | 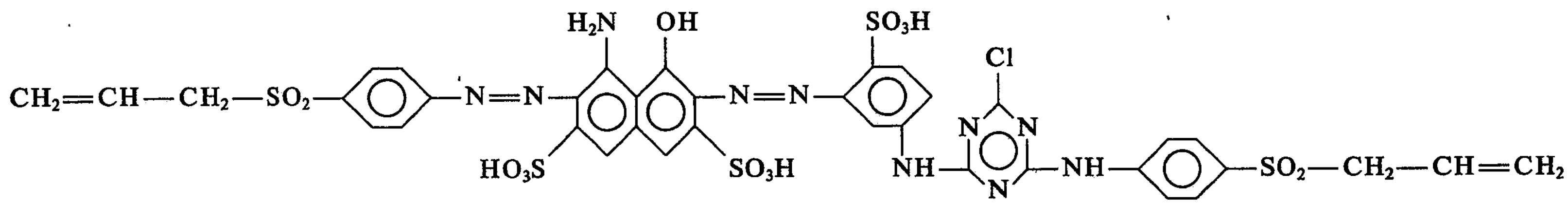 | marineblau |
| 53 | 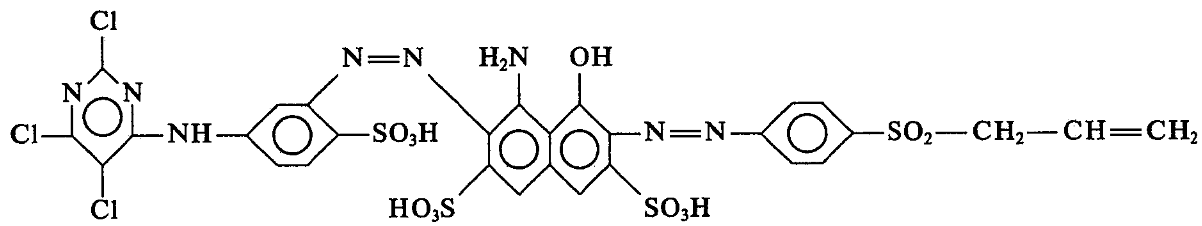 | blau |
| 54 | 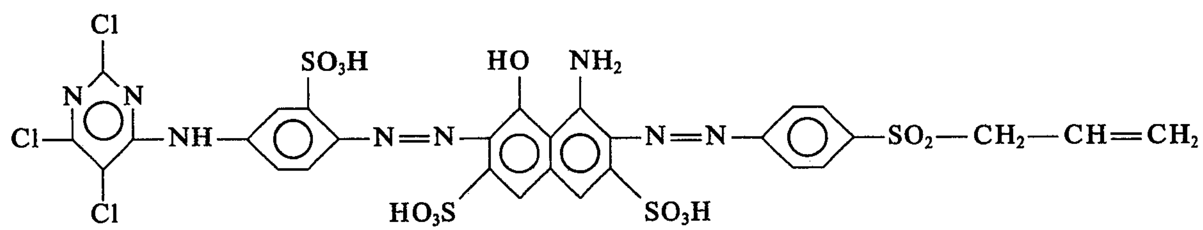 | blaugrün |
| 55 | 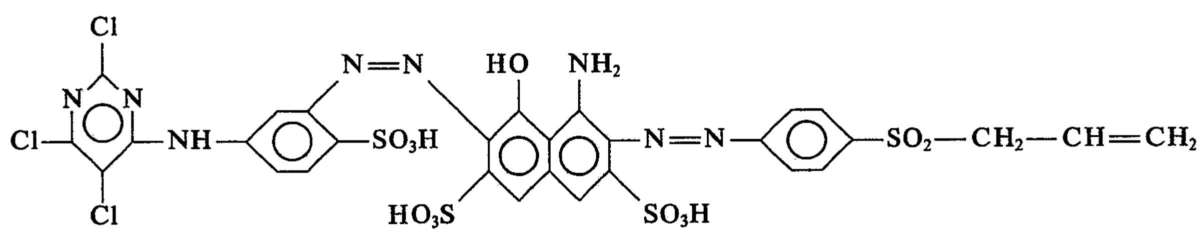 | blau |

(Fortsetzung)

| Beispiel | | Farbton |
|---|---|---|
| 56 | 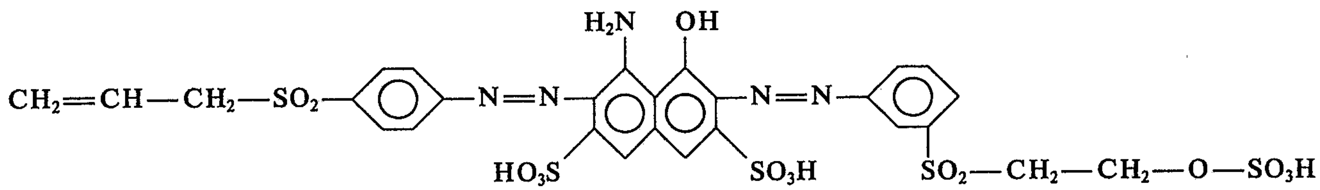 | marineblau |
| 57 | 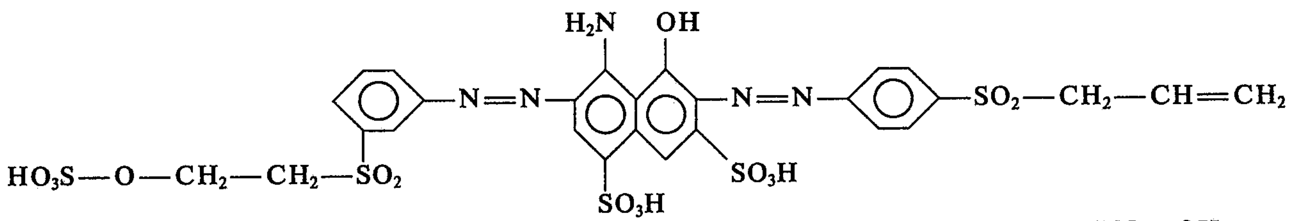 | marineblau |
| 58 | 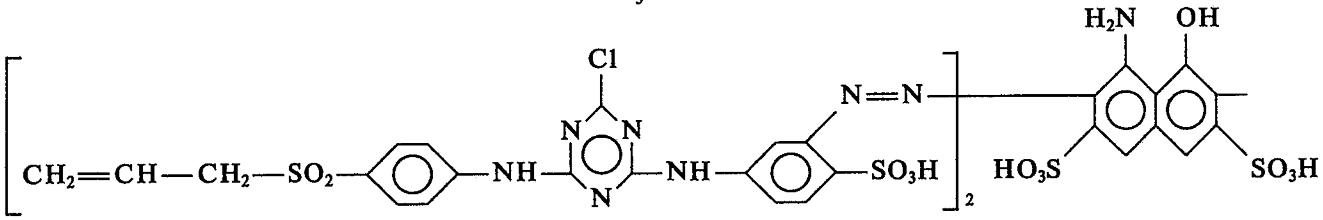 | marineblau |
| 59 | 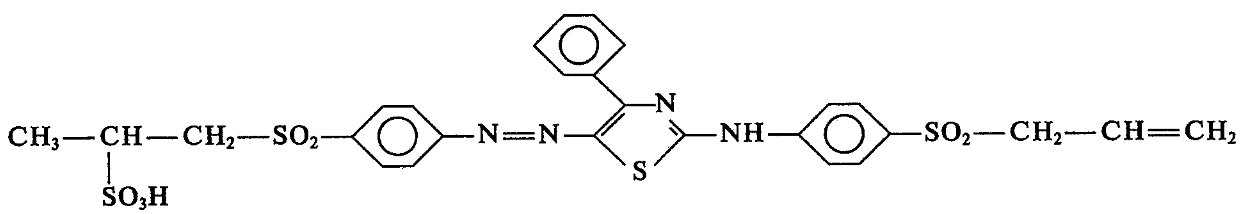 | violett |
| 60 | 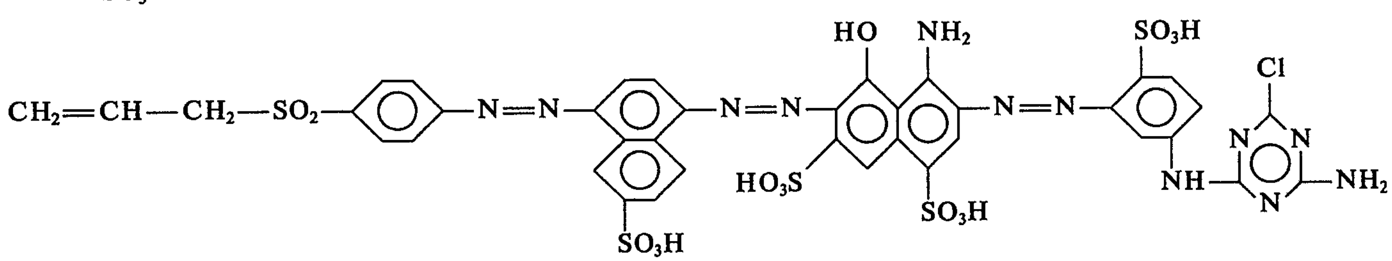 | blaugrün |

(Fortsetzung)

| Beispiel | | Farbton |
|---|---|---|
| 61 | 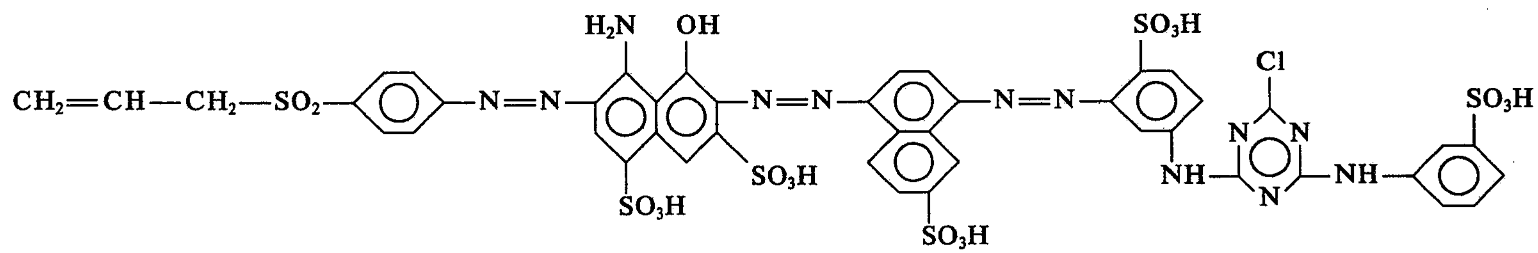 | blaugrün |
| 62 | 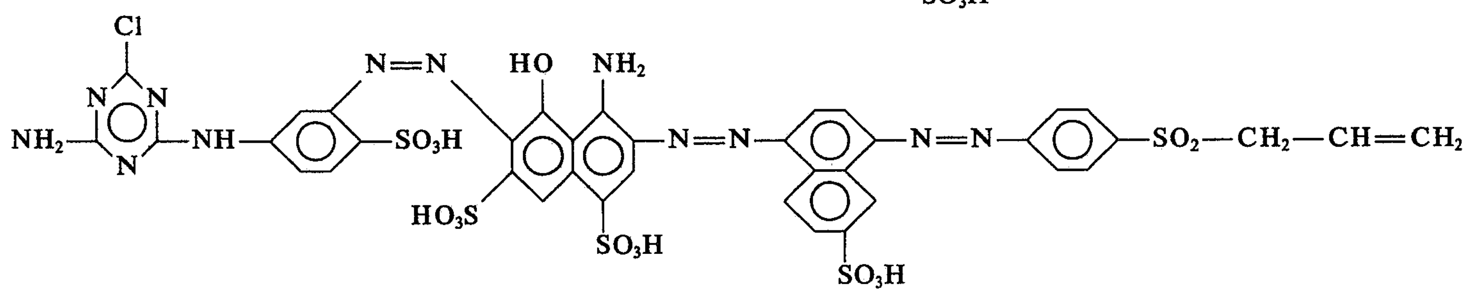 | blaugrün |
| 63 | 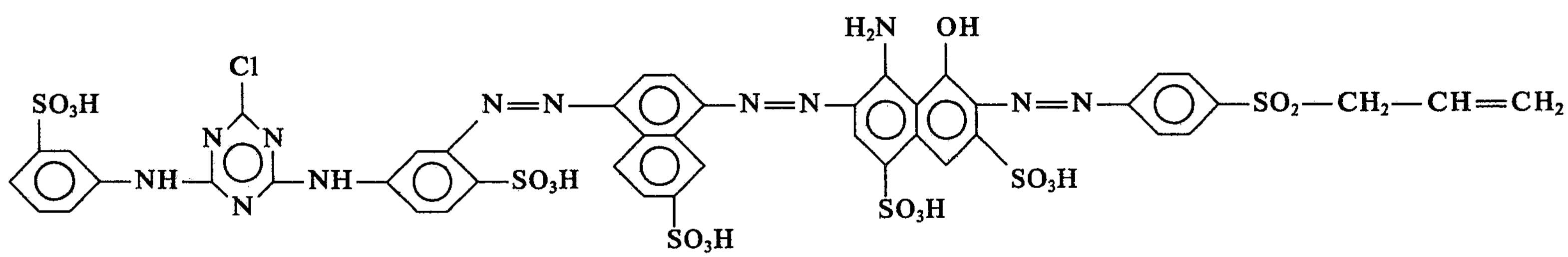 | blaugrün |

**Patentansprüche**

1. Sulfonsäuregruppenhaltige Verbindungen mit reaktiven Resten der allgemeinen Formel I

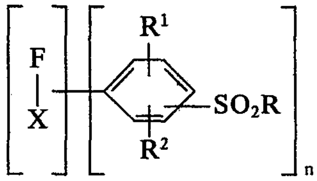

in der

F der Rest eines schwermetallfreien Monoazo-, Polyazo- oder Anthrachinonfarbstoffes,
X eine Hydroxyäthylsulfonyl-, Sulfatoäthylsulfonyl-, Chloräthylsulfonyl-, Vinylsulfonyl-, Chloracetyl-, Acryloyl- oder Halogenpropionylgruppe oder eine reaktive Gruppe der Triazin-, Pyrimidin-, Chinazolin- oder Chinoxalinreihe,
n die Zahlen 1 oder 2,
$R^1$ und $R^2$ unabhängig voneinander Wasserstoff, Chlor, Brom, Methyl oder Methoxy und
R ein Rest der Formel

$$-CH_2-CH=CH_2 \qquad -CH=CH-CH_3 \qquad -CH=CH-CH_2Cl$$

$$-CH=CH-CH_2OH \qquad -CH_2-\underset{\displaystyle W}{\underset{|}{CH}}-CH_2R^3$$

sind, wobei $R^3$ H, OH oder $C_1$- bis $C_3$-Alkyl und W Hydroxysulfonyl sind.

2. Verwendung der Verbindungen gemäß Anspruch 1 zum Färben von hydroxylgruppenhaltigen Fasern oder Polyamiden, insbesondere Baumwolle und Wolle.

**Claims**

1. A compound containing sulfonic acid groups and reactive radicals, of the general formula I

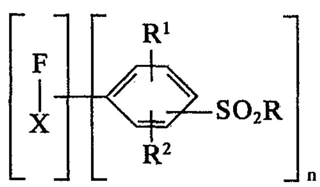

where

F is the radical of a monoazo, polyazo or anthraquinone dye which is free from heavy metal,
X is hydroxyethylsulfonyl, sulfatoethylsulfonyl, chloroethylsulfonyl, vinylsulfonyl, chloroacetyl,acryloyl or halopropionyl or is a reactive group from the triazine, pyrimidine, quinazoline or quinoxyline series,
n is 1 or 2,
$R^1$ and $R^2$ independently of one another are hydrogen, chlorine, bromine, methyl or methoxy, and
R is

$$-CH_2-CH=CH_2 \qquad -CH=CH-CH_3 \qquad -CH=CH-CH_2Cl$$

$$-CH=CH-CH_2OH \quad \text{or} \quad -CH_2-\underset{\displaystyle W}{\underset{|}{CH}}-CH_2R^3$$

where $R^3$ is H, OH or $C_1$–$C_3$-alkyl, and W is hydroxysulfonyl.

2. The use of a compound as claimed in claim 1 for dyeing hydroxyl-containing fibers or polyamides, especially cotton and wool.

**Revendications**

1. Composés contenant des groupes acide sulfonique, avec des radicaux réactifs, de formule générale I

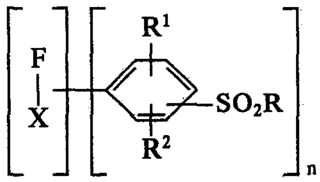

(I)

dans laquelle

| | |
|---|---|
| F | est le radical d'un colorant monoazoïque, polyazoïque ou anthraquinonique exempt de métaux lourds, |
| X | est un groupe hydroxyéthylsulfonyle, sulfatoéthylsulfonyle, chloréthylsulfonyle, vinylsulfonyle, chloracétyle, acryloyle ou halogénopropionyle, ou un groupe réactif de la série des triazines, des pyrimidines, des quinazolines ou des quinoaxalines, |
| n | est l'un ou l'autre des nombres 1 et 2, |
| $R^1$ et $R^2$ | indépendamment l'un de l'autre, sont chacun un atome d'hydrogène, de chlore, de brome, un radical méthyle ou methoxy et |
| R | est un radical de formule |

$$-CH_2-CH=CH_2 \qquad -CH=CH-CH_3 \qquad -CH=CH-CH_2Cl$$

$$-CH=CH-CH_2OH \qquad -CH_2-\underset{\substack{|\\ W}}{CH}-CH_2R^3$$

$R^3$ étant H, OH ou un alcoyle en $C_1$ à $C_3$ et W étant un hydroxysulfonyle.

2. Utilisation des composés selon la revendication 1 pour la teinture de fibres contenant des groupes hydroxyles ou de polyamides, en particulier de coton et de laine.